**Europäisches Patentamt**

**European Patent Office**

**Office européen des brevets**

(11) Numéro de publication: **0 022 513**
**B1**

(12) **FASCICULE DE BREVET EUROPEEN**

(45) Date de publication du fascicule du brevet: **24.10.84**

(21) Numéro de dépôt: **80103733.4**

(22) Date de dépôt: **01.07.80**

(51) Int. Cl.³: **G 06 F 15/332**

(54) **Appareil de calcul de transformée de Fourier discrète bidimensionnelle.**

(30) Priorité: **12.07.79 FR 7918530**

(43) Date de publication de la demande:
**21.01.81 Bulletin 81/03**

(45) Mention de la délivrance du brevet:
**24.10.84 Bulletin 84/43**

(84) Etats contractants désignés:
**DE FR GB**

(56) Documents cités:

*IBM TECHNICAL DISCLOSURE BULLETIN, vol. 21, no. 7, decembre 1978, pages 2859-2861, New York, U.S.A., QUANDALLE: "Multidimensional discrete Fourier transform calculated through polynomial transforms"* **Proceedings of the 1979 IEEE International Conference on Acoustics, Speech and Signal Processing, Washington, DC, April 2-4, 1979, pp. 510-513 IBM Journal of Research and Development, vol. 22, no. 2, March 1978, pp 134-144 W.K. Pratt, Digital Image Processing, 1978, pp 232-235**

(73) Titulaire: **International Business Machines Corporation**
**Old Orchard Road**
**Armonk, N.Y. 10504 (US)**

(72) Inventeur: **Nussbaumer, Henri J.**
**La Font Antique**
**F-06610 La Gaude (FR)**

(74) Mandataire: **de Pena, Alain**
**Compagnie IBM France Département de Propriété Industrielle**
**F-06610 La Gaude (FR)**

Courier Press, Leamington Spa, England.

**Description**

Domaine technique

La presente invention concerne les équipements de traitement de données pour le calcul de fonctions mathématiques complexes, et plus particulièrement un appareil pour calculer la transformee de Fourier discrète bidimensionnelle de signaux bidimensionnels, basé sur l'utilisation des transformées polynômiales.

Etat de la technique

La transformée de Fourier discrète (en abrégé DFT) est une opération mathématique connue qui convertit un signal temporel échantillonné en sa représentation dans le domaine des fréquences, et inversement. Le développement des techniques numériques a permis la réalisation de nombreux dispositifs numériques pour le calcul de la transformée de Fourier discrète. Ces dispositifs, qui sont limités au calcul de la DFT unidimensionnelle d'un signal unidimensionnel sont aujourd'hui largement utilisés pour le traitement numérique du signal et plus précisément pour le traitement numérique de signaux unidimensionnels.

En parallèle au traitement numérique des signaux unidimensionnels, on voit se développer aujourd'hui le traitement numérique des images. Le traitement des images se caractérise par le fait que le signal d'image est un signal bidimensionnel. Dans le traitement de l'image, il existe de nombreuses applications dans lesquelles il est utile et souvent nécessaire de convertir le signal d'image en sa représentation dans le domaine des fréquences. La DFT bidimensionnelle fournit cette conversion. Parmi les applications mentionnées plus haut on peut citer, par exemple: le filtrage bidimensionnel d'une image, tel que décrit au chapitre 7 de l'ouvrage de L.R. Rabiner et B. Gold, "Theory and Application of Digital Signal Processing", Prentice-Hall, Inc. 1975; l'analyse des images de la terre fournies par les satellites de ressources terrestres; et la technique de radiographie, dite tomographie.

Le calcul de la DFT bidimensionnelle conduit à un nombre trèe important d'opérations arithmétiques simples telles que la multiplication et l'addition. Le calcul d'une DFT bidimensionnelle de dimension $N \times N$ s'effectue habituellement en calculant $2N$ DFT unidimensionnelles de $N$ termes. (La dimension $N \times N$ indique que la DFT porte aur $N \times N$ termes, ou encore que l'image à transformer est définie par $N \times N$ échantillons). Si on désigne par $M_1$ le nombre dè multiplications correspondant à une DFT unidimensionnelle de dimension $N$, le calcul de la DFT bidimensionnelle nécessitera $2NM_1$ multiplications.

L'article de H. J. Nussbaumer et P. Quandalle "New Polynomial Transform Algorithms for Fast DFT Computation" dans "Proceedings of the 1979 IEEE International Conference on Acoustics, Speech and Signal Processing, Washington DC, April 2—4, 1979, décrit deux techniques pour calculer des DFT multidimensionnelles au moyen de transformées polynômiales. Les auteurs montrent comment une DFT multidimensionnelle peut être transformée efficacement en plusieurs DFT unidimensionnelles réduites au moyen de transformées polynômiales. Ils montrent ensuite comment cette approche par transformées polynômiales combinée avec l'algorithme de transformée de Fourier rapide de Rader-Brenner permet de réduire de façon significative le nombre d'opérations nécessaires pour calculer une DFT multidimensionnelle.

L'inconvénient des techniques décrites dans cet article est que la transformation complète d'une DFT multidimensionnelle en DFT unidimensionnelles nécessite un très grand nombre de transformées polynômiales, et peut conduire ainsi à une réalisation pratique très compliquée.

Exposé de l'invention

L'objet de l'invention, telle qu'elle est caractérisée dans les revendications, est de fournir un appareil de calcul de DFT didimensionnelle qui ne nécessite pas l'utilisation d'un grand nombre de transformées polynômiales et dont la réalisation pratique est relativement simple.

D'une manière générale, l'invention selon la revendication 1 propose un appareil pour calculer la transformée de Fourier discrète bidimensionnelle, notée

$$\overline{X}_{k_1, k_2} \quad k_1, \, k_2 = 0, \, 1, \ldots, N-1$$

de $N^2$ termes notés

$$x_{n_1, \, n_2}, \quad n_1, \, n_2 = 0, 1, \ldots, \, N-1$$

répartis en $N$ blocs de $N$ termes chacun. L'indice $n_1$ indique la position du terme dans le bloc, et l'indice $n_2$ indique le numéro du bloc. L'appareil comprend des moyens pour recevoir successvement les $N$ blocs et des moyens pour multiplier respectivement les $N$ termes de chacun des blocs par $N$ coefficients complexes notés $W^{-n}1$, et fournir ainsi $N$ blocs de $N$ termes chacun, notés $X_{n_2}(Z)$ et qui sont emmagasinés dans une mémoire. Les $N$ blocs $X_{n_2}(Z)$ sont appliqués à des moyens de transformation qui en dérivent $N$ blocs notés

2

$$\overline{X}_{(2k_1+1)k_2}(Z)$$

conformément à la transformée (polynômiale représentée par la relation suivante

$$\overline{X}_{(2k_1+1)k_2}(Z)= \sum_{n_2=0}^{N-1} X_{n_2}(Z)\, Z^{2n_2k_2}\ \text{modulo}\ (Z^N+1)$$

dans laquelle les multiplications par puissances de Z se réduisent à des rotations des termes à l'intérieur du bloc, suivies par une inversion de signe des termes dépassant la longueur du bloc.

L'appareil de l'invention comprend en outre des moyens pour multiplier respectivement les N termes de chacun des N blocs

$$\overline{X}_{(2k_1+1)k_2}(Z)$$

par N coefficients complexes notés $W^l$, $l=0,1,\ldots, N-1$. Les $N^2$ termes de la DFT bidimentionnelle

$$\overline{X}_{k_1,\,k_2}$$

sont fournis par des moyens qui calculent les N termes de la DFT unidimensionnelle de chacun des N blocs

$$\overline{X}_{(2k_1+1)k_2}$$

dont les termes ont été multipliés par les coefficients $W^l$.

Selon un autre mode de réalisation de l'invention (cf revendication 2), les termes de la DFT $\overline{X}_{k_1,k_2}$ correspondant à $k_1$ impair et $k_1$ pair sont traités séparément. Chacun des N blocs des termes $x_{n_1,\,n_2}$ est réduit en deux blocs réduits de N/2 termes, notes respectivement $X^1_{n_2}(Z)$ et $X^2_{n_2}(Z)$. Les blocs réduits $X^2_{n_2}(Z)$ sont traités par un appareil semblable au premier mode de réalisation de l'invention et n'en diffère que par le fait que les blocs traités ne comprennent que N/2 termes. Les blocs $X^2_{n_2}(Z)$ fournissent les $N^2/2$ termes de $\overline{X}_{k_1,\,k_2}$ qui correspondant à $k_1$ pair.

Les N blocs réduits $X^1_{n_2}(Z)$ sont appliqués à des moyens de transformation qui en dérivent N blocs réduits notés

$$\overline{X}^1_{(2p+1)k_2}(Z),$$

$p=0, 1, \ldots, N/2-1$, conformément à la transformée polynomiale

$$\overline{X}^1_{(2p+1)k_2}(Z)= \sum_{n_2=0}^{N-1} X^1_{n_2}(Z)\, Z^{n_2k_2}\ \text{modulo}\ (Z^{N/2}-1)$$

Les N/2 termes de chacun des blocs

$$\overline{X}^1_{(2p+1)k_2}(Z)$$

sont multiplies respectivement par des coefficients $W^{2l}$, $l=0, 1, \ldots, N/2-1$. Les $N^2/2$ termes de $\overline{X}_{k_1,\,k_2}$ qui correspondent à $k_1$ impair sont fournis par des moyens qui calculent les N/2 termes de la DFT unidimensionnnelle de chacun des N blocs

$$\overline{X}^1_{(2p+1)k_2}(Z)$$

dont les termes ont été multipliés par les coefficients $W^{2l}$.

L'invention est supposée ci-après plus en détail à l'aide de dessins annexés à ce texte, qui représentent deux modes de réalisation préférés de celle-ci.

Brève description des figures

La Figure 1 représente schématiquement un premier mode de réalisation de l'invention.

La figure 2 représente un exemple de réalisation du dispositif de calcul de transformée polynômiale 20 de la figure 1.

La figure 3 représente un second mode de réalisation de l'invention.

La figure 4 représente un exemple de réalisation du dispositif de réduction 81 de la figure 3.

Modes de réalisation de l'invention

Les transformées polynômiales ont été décrites dans plusieurs publications et notamment dans les articles suivants:

"Digital Filtering Using Polynomial Transforms", H. J. Nussbaumer, Electronics Letters, 23rd, June 1977, Vol. 13, No. 13.

"Computation of Convolutions and Discrete Fourier Transforms by Polynomial Transforms", H. J. Nussbaumer and P. Quandalle, IBM Journal of Research and Development, Vol. 22, No. 2, March 1978.

Par commodité, on rappellera toutefois ci-dessous la définition d'une transformée polynômiale.

Soit un ensemble de N polynômes $\{P_m(Z)\}$ chacun d'eux étant défini par la relation suivante:

$$P_m(Z)= \sum_{n=0}^{N-1} a_{n,m}Z^n \quad m=0, 1, ..., N-1 \tag{1}$$

On définit la transformée polynômiale de l'ensemble $\{P_m(Z)\}$ comme l'ensemble de N polynômes $\{A_k(Z)\}$, chacun d'eux étant donné par

$$A_k(Z)= \sum_{m=0}^{N-1} P_m(Z)Z^{2mk} \text{ modulo } (Z^N+1) \quad k=0, 1, ..., N-1 \tag{2}$$

On définit de façon similaire la transformée inverse par:

$$P_l(Z)=\frac{1}{N} \sum_{k=0}^{N-1} A_k(Z)Z^{-2lk} \text{ modulo } (Z^N+1) \quad l=0, 1, ..., N-1 \tag{3}$$

($\equiv$ signifie congruent à)

Le, calcui des transformées polynômiales se réduit à des additions et à des multiplications par puissances de Z. Par exemple, puisque la relation (2) est définie modulo $(Z^N+1)$, on a $Z^N=-1$ et les multiplications des polynômes $P_m(Z)$ par des puissances de Z correspondent à de simples rotations des termes $a_{n,m}$ à l'intérieur des polynômes $P_m(Z)$ suivis d'inversions de signe des termes en dépassement de capacité. Les additions polynômiales sont effectuées en additionnant séparément les termes correspondant à une même puissance de Z. Pour plus de détails on se référera aux articles précités.

Avant de décrire l'appareil de l'invention on en décrira la théorie de fonctionnement. On considère la DFT bidimensionnelle notée $\overline{X}_{k_1, k_2}$ de dimension NxN des échantillons $x_{n_1, n_2}$ définie par la relation connue suivante

$$\overline{X}_{k_1, k_2}= \sum_{n_1=0}^{N-1} \sum_{n_2=0}^{N-1} x_{n_1, n_2}e^{-j2\pi(n_1k_1+n_2k_2)/N} \tag{4}$$

$$k_1, k_2=0, ..., N-1 \text{ avec } j=\sqrt{-1}.$$

On notera que puisque $k_1$ et $k_2$ peuvent prendre chacun N valeurs différentes, la DFT $X_{k_1, k_2}$ est constituée par $N^2$ termes.

En posant

$$W=e^{-j\pi/N} \tag{5}$$

on peut écrire la relation (4) sous la forme:

$$\overline{X}_{k_1, k_2}= \sum_{n_1=0}^{N-1} \sum_{n_2=0}^{N-1} x_{n_1, n_2} W^{2(n_1k_1+n_2k_2)} \tag{6}$$

La relation (6) peut encore s'écrire sous la forme:

$$\overline{X}_{k_1, k_2}= \sum_{n_1=0}^{N-1} \sum_{n_2=0}^{N-1} x_{n_1, n_2}W^{-n_1}W^{n_1(2k_1+1)}W^{2n_2k_2} \tag{7}$$

On remplace la représentation donnée par la relation (7) par une représentation polynômiale éequivalente.

$$X_{n_2}(Z)= \sum_{n_1=0}^{N-1} x_{n_1, n_2} W^{-n_1}Z^{n_1} \tag{8}$$

$$\overline{X}_{k_2}(Z) = \sum_{n_2=0}^{N-1} X_{n_2}(Z)W^{2n_2k_2} \text{ Modulo } (Z^N+1) \tag{9}$$

$$\overline{X}_{k_1, k_2} \equiv \overline{X}_{k_2}(Z) \text{ Modulo } (Z-W^{2k_1+1}) \tag{10}$$

On décrira ci-après brièvement l'équivalence entre les relations (8) à (10) et la relation (7).

En remplaçant $X_{n_2}(Z)$ dans la relation (9) par sa valeur tirée de la relation (8), on obtient:

$$\overline{X}_{k_2}(Z) \equiv \sum_{n_1=0}^{N-1} \sum_{n_2=0}^{N-1} x_{n_1, n_2} W^{-n_1} Z^{n_1} W^{2n_2k_2}$$

En remplaçant $\overline{X}_{k_2}(Z)$ dans la relation (10) par sa valeur tirée de la relation ci-dessus, on obtient:

$$\overline{X}_{k_1, k_2} \equiv \sum_{n_1=0}^{N-1} \sum_{n_2=0}^{N-1} x_{n_1, n_2} W^{-n_1} Z^{n_1} W^{2n_2k_2} \text{ modulo } (Z-W^{2k_1+1})$$

En remplaçant $Z$ par $W^{2k_1+1}$ dans la relation ci-dessus, on obtient la relation (7).

On notera que:

$n_1$ et $n_2$ pouvant prendre N valeurs différentes, la relation (8) définit N polynômes de N termes chacun,

$n_2$ et $k_2$ pouvant prendre N valeurs différentes, la relation (9) définit N polynômes de N termes chacun, et

$\overline{X}_{k_1, k_2}$ définit la DFT de $N^2$ termes.

On suppose maintenant que N est une puissance de 2. La quantité $(2k_1+1)$ étant un nombre impair premier relatif avec N, le produit $(2k_1+1)k_2$ modulo N prend une fois et une seule toutes les valeurs comprises entre 0 et $N-1$ pour $k_2$ prenant une fois et une seule toutes les valeurs comprises entre 0 et $N-1$.

On peut ainsi remplacer $k_2$ par $(2k_1+1) k_2$ dans les relations (9) et (10) et on obtient respectivement les relations équivalentes (11) et (12).

$$\overline{X}_{(2k_1+1)k_2}(Z) \equiv \sum_{n_2=0}^{N-1} X_{n_2}(Z)W^{2n_2k_2(2k_1+1)} \text{ Modulo } (Z^N+1) \tag{11}$$

$$\overline{X}_{k_1, (2k_1+1)k_2} \equiv \overline{X}_{(2k_1+1)k_2}(Z) \text{ Modulo } (Z-W^{2k_1+1}) \tag{12}$$

Puisque d'après la relation (12) $X_{(2k_1+1)k_2}(Z)$ est défini modulo $(Z-W^{2k_1+1})$ on a $Z=W^{2k_1+1}$ et on peut remplacer $W^{2k_1+1}$ par $Z$ dans la relation (11) qui devient

$$\overline{X}_{(2k_1+1)k_2}(Z) = \sum_{n_2=0}^{N-1} X_{n_2}(Z)Z^{2n_2k_2} \text{ Modulo } (Z^N+1) \tag{13}$$

$\overline{X}_{(2k_1 1)k_2}(Z)$ est un polynôme de N termes que l'on peut écrire

$$\overline{X}_{(2k_1+1)k_2}(Z) = \sum_{l=0}^{N-1} Y_{(2k_1+1)k_2, l} Z^l \tag{14}$$

où les $Y_{(2k_1+1)k_2,l}$ pour $l$ variant de 0 à $N-1$ représentent les N termes du polynôme $\overline{X}_{(2k_1+1)k_2}(Z)$, la variable $Z^l$ indiquant la position du terme $Y_{(2k_1+1)k_2,l}$ dans le polynôme.

En reportant (14) dans (12) on obtient

$$\overline{X}_{k_1, (2k_1+1)k_2} = \sum_{l=0}^{N-1} Y_{(2k_1+1)k_2,l} Z^l \text{ Modulo } (Z-W^{2k_1+1}) \tag{15}$$

Puisque $Z=W^{2k_1+1}$, la relation (15) peut s'écrire

$$\overline{X}_{k_1, (2k_1+1)k_2} = \sum_{l=0}^{N-1} Y_{(2k_1+1)k_2,l} W^l W^{2lk_1} \tag{16}$$

Les termes de la DFT $\overline{X}_{k_1, k_2}$ sont obtenus par une simple permutation des termes de la DFT $\overline{X}_{k_1, (2k_1+1)k_2}$, permutation qui fait passer du couple d'indices $k_1$, $(2k_1+a)k_2$ au couple d'indices $\underline{k}_1$, $k_2$.

On calculera donc la DFT $\overline{X}_{k_1, k_2}$ des échantillons $x_{n_1, n_2}$ par les étapes suivantes:

. on calculera les polynomes $X_{n_2}(Z)$ à partir des échantillons $x_{n_1, n_2}$ conformément à la relation (8),
. on calculera ensuite les polynômes $\overline{X}_{(2k_1+1)k_2}(Z)$ conformément à la relation (13),
. on calculera la DFT $\overline{X}_{k_1, (2k_1+1)k_2}$ conformément à la relation (16), et
. on obtiendra les termes de la DFT $\overline{X}_{k_1, k_2}$ par une simple permutation des termes de $\overline{X}_{k_1, (2k_1+1)k_2}$.

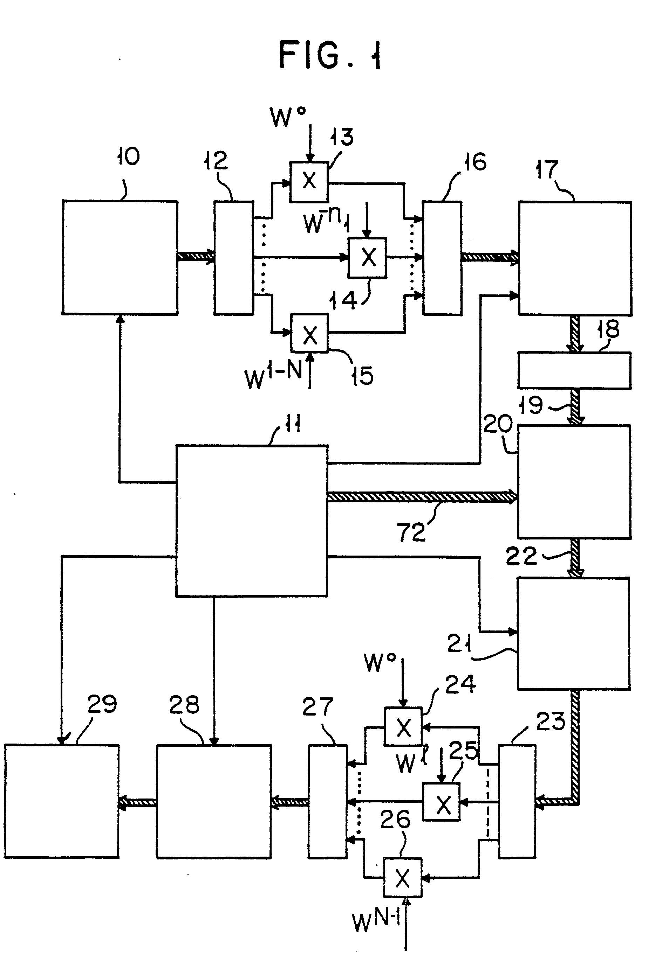

On décrira maintentant un premier mode de réalisation de l'appareil de l'invention on se référant à la figure 1.

On supposera qu'on ait à calculer la DFT bidimensionnelle $\overline{X}_{k_1, k_2}$, avec $k_1$, $k_2=0, 1, \ldots, N-1$ de N blocs de N termes chacun, N étant une puissance de 2. Ou notera ces termes

$$x_{n_1, n_2} \quad n_1, n_2=0, 1, \ldots, N-1$$

où

$n_1$ indique la position du terme dans le bloc, et
$n_2$ indique le bloc.

Ces N blocs de N termes pourraient représenter, par exemple, une image définie par N×N échantillons, chaque bloc constituant une rangée d'échantillons. Par la suite et pour éviter les confusions dans la description qui suit on se référera à une image et on désignera $x_{n_1, n_2}$ par le terme "échantillon" et un bloc par le terme "rangée". Les indices $n_1$ et $n_2$ indiqueront alors respectivement la position de l'échantillon dans la rangée, et la rangée.

On supposera en outre que ces échantillons sont codes en numérique et disponibles dans une mémoire d'échantillons 10.

Une mémoire de contrôle 11 commande la lecture des échantillons de la mémoire 10 et leur chargement, rangée par rangée, dans un registre à N étages 12. La mémoire de contrôle 11 sera constituée de façon connue par une mémoire permanente contenant un microprogramme commandant la séquence des opérations de lecture de la mémoire 10. La séquence des opérations sera adaptée à la taille du bus de sortie de la mémoire 10, au nombre N d'échantillons et au nombre de bits utilisés pour coder chacun des échantillons. Par exemple, si la taille du bus de sortie est de seize bits, si N est égal à 16, et si chaque échantillon est codé par un seul bit, les seize échantillons d'une même rangée pourront être lus et chargés dans le registre 12 simultanément.

Les N échantillons

$$x_{0, n_2}, \ldots, x_{n_1, n_2}, \ldots, x_{N-1, n_2}$$

de chacune des rangées, disponibles dans le registre 12 sont appliqués respectivement à N multiplicateurs 13, …, 14, …, 15 où ils sont multipliés respectivement par les quantités $W^0$, …, $W^{-n_1}$, …, $W^{-(N-1)}$) où $W=e^{-j\pi/N}$.

(Sur la figure, on a écrit la quantité $W^{-(N-1)}$ sous la forme $W^{1-N}$ pour éviter les parenthèses).

Il faut noter ici que la quantité W étant une quantité complexe, et les échantillons $x_{n_1, n_2}$ pouvant être complexes, les N multiplicateurs 13, …, 14, …, 15 seront des multiplicateurs complexes conventionnels. On obtient à la sortie de ces multiplicateurs la séquence des N termes suviants

$$x_{0, n_2} W^0, \ldots, x_{n_1, n_2} W^{-n_1}, \ldots, x_{N-1, n_2} W^{-(N-1)} \tag{17}$$

qui sont chargés respectivement dans les N étages d'un registre 16.

La séquence de N termes (17) peut être représentée dans l'algèbre des polynômes par le polynôme

$$X_{n_2}(Z) = \sum_{n_1=0}^{N-1} x_{n_1, n_2} W^{-n_1} Z^{n_1}$$

qui est le polynôme de la relation précitée (8). On notera que la variable $Z^{n_1}$ indique la position du terme $x_{n_1, n_2} W^{-n_1}$ dans la séquence, et que bien que la relation (8) comprenne le signe de sommation $\Sigma$, en réalité les différents termes de la séquence ne sont pas sommés entre eux. La relation (8) n'est qu'une relation qui permet de représenter la séquence (17). Par la suite on désignera la séquence (17) par la désignation de: polynôme $X_{n_2}(Z)$.

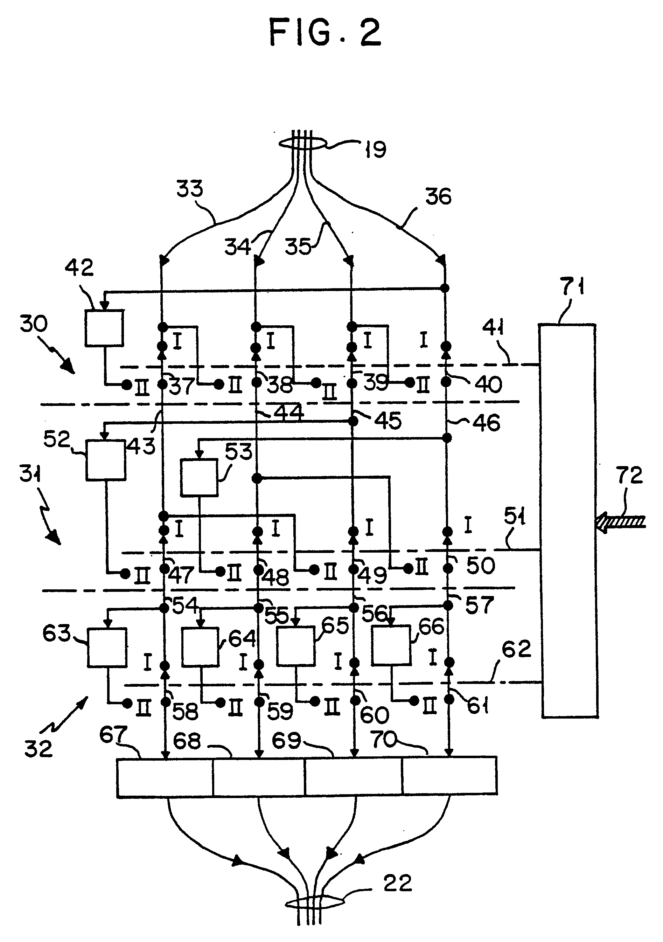

Les N termes du polynôme $X_{n_2}(Z)$ contenus dans le registre 16 sont ensuite chargée dans la mémoire de polynômes 17 sous la commande de la mémoire de contrôle 11. Après que les N rangées d'échantillons contenus dans la mémoire d'échantillons 10 aient été multipliés terme à terme par les quantités $W^0$, …, $W^{-n_2}$, …, $W^{-(N-1)}$, les N polynômes $X_{n_2}(Z)$ pour $n_2$ variant de 0 à $(N-1)$ seront disponibles dans la mémoire de polynômes 17. Les polynômes $X_{n_2}(Z)$ sont extraits séquentiellement de la mémoire 17 et chargés dans un registre à N étages 18 sous le contrôle de la mémoire de contrôle 11. Les polynômes contenus dans le registre 18 sont appliqués séquentiellement à travers un bus 19 à un dispositif 20 qui calcule les N polynômes $\overline{X}_{(2k_1+1)k_2}(Z)$ conformément à la transformée polynômiale définie par la relation (13), sous le contrôle de la mémoire de contrôle 11 par un bus 72. On décrira un exemple de réalisation du dispositif de calcul 20 en référence à la figure 2.

Les N polynômes $\overline{X}_{(2k_1+1)k_2}(Z)$ sont stockés dans une mémoire 21 à travers un bus 22.

Les termes des polymômes $\overline{X}_{(2k_1+1)k_2}(Z)$ seront notés $Y_{(2k_1+1)k_2,l}$ avec $l=0, 1, \ldots, N-1$.

Le polynôme $\overline{X}_{(2k_1+1)k_2}(Z)$ peut alors s'exprimer par la relation (14) rappelée ci-dessous

$$\overline{X}_{(2k_1+1)k_2}(Z)= \sum_{l=0}^{N-1} Y_{(2k_1+1)k_2,l} Z^l \tag{14}$$

La memoire de contrôle 11 commande la lecture des N polynômes $\overline{X}_{(2k_1+1)k_2}(Z)$ pour $(2k_1+1)k_2=0, 1, \ldots, N-1$, de la memoire 21 et leur chargement polynôme par polynôme dans un registre à N étages 23. Les N termes

$$Y_{(2k_1+1)k_2,0} \ldots Y_{(2k_1+1)k_2,l} \ldots Y_{(2k_1+1)k_2,(N-1)}$$

de chacun des polynômes $\overline{X}_{(2k_1+1)k_2}(Z)$ sont appliqués respectivement à N multiplicateurs complexes 24, ..., 25, ... 26, où ils sont multipliés respectivement par les quantités

$$W^0, \ldots, W^l \ldots W^{N-1}$$

On obtient respectivement à la sortie de ces N multiplicateurs les N termes suivantes:

$$Y_{(2k_1+1)k_2,0}W^0 \ldots Y_{(2k_1+1)k_2,l} W^l \ldots Y_{(2k_1+1)k_2,N-1}W^{N-1} \tag{18}$$

qui sont chargés dans un registre à N étages 27.

En posant

$$s_{(2k_1+1)k_2,l}=Y_{(2k_1+1)k_2,l} W^l \tag{15}$$

on représentera la séquence (18) par le polynôme de N termes

$$\overline{S}_{(2k_1+1)k_2}(Z)= \sum_{l=0}^{N-1} s_{(2k_1+1)k_2,l} Z^l \tag{20}$$

Les N termes de chacun des polynômes $\overline{S}_{(2k_1+1)k_2}(Z)$ disponibles dans le registre 27 sont appliqués à un dispositif de calcul de DFT unidimensionnelle 28 qui peut être un des nombreux dispositifs de calcul de DFT utilisant la technique de la transformée de Fourier rapide et qui existent dans le commerce. On en trouvera un exemple de réalisation dans "Theory and Application of Digital Signal Processing" L. R. Rabiner et B. Gold—Prentice-Hall—Englewood Cliffs, New Jersey (1975) -Chapitre 10, pp. 573—626.

A partir des N termes de chacun des polynômes $\overline{S}_{(2k_1+1)k_2}(Z)$, le dispositif 28 calcule les N termes de la DFT.

$$\sum_{l=0}^{N-1} s_{(2k_1+1)k_2,l} e^{-j2\pi l k_1/N}, k_1=0, 1, \ldots, N-1 \tag{21}$$

Puisque $W=e^{-j\pi/N}$, on remarquera que l'expression (21) est en fait la DFT $\overline{X}_{k_1(2k_1+1)k_2}$ de la relation (16) rappelée ci-dessous.

$$\overline{X}_{k_1,(2k_1+1)k_2}= \sum_{l=0}^{N-1} Y_{(2k_1+1)k_2,l} W^l W^{2lk_1} \tag{16}$$

Les N termes de la DFT $\overline{X}_{k_1,(2k_1+1)k_2}$ fournis par le dispositif de calcul 28 sont stockés dans une mémoire 29, chacun de ces termes étant stocké dans une position de mémoire dont l'address est représentative de la valeur du couple d'indices $k_1, (2k_1+1)k_2$ correspondant à ce terme. Par exemple, le terme $\overline{X}_{3,4}$ est stocké à une adresse représentative du couple de valeurs 3, 4.

Le dispositif de calcul de DFT 28 fournit N termes à partir de chacun des N polynômes

$\overline{S}_{(2k_1+1)k_2}(Z)$. Lorsque les N polynômes auront été appliqués séquentiellement au dispositif 28, la mémoire 29 contiendra les $N^2$ termes de la DFT $\overline{X}_{k_1,(2k_1+1)k_2}$.

Comme vu plus haut dans l'exposé de la théorie du fonctionnement de l'appareil de l'invention, tous les termes de la DFT $\overline{X}_{k_1,k_2}$ se trouvent dans les termes de la DFT $\overline{X}_{k_1,(2k_1+1)k_2}$. Pour obtenir les termes de la DFT $\overline{X}_{k_1,k_2}$ on lira les termes stockés dans la mémoire 29 en tenant compte de la permutation d'indice $(2k_1+1)k_2$ à $k_2$.

Cette opération de permutation par lecture de la mémoire 29 se fera sous le contrôle de la mémoire de contrôle 11 à l'aide de tables dont on donnera un exemple ci-dessous.

On supposera que N=8 et qu'on veuille lire les 8 termes correspondant à

$$k_1=1 \text{ et } k_2=0, 1, ..., 7.$$

On aura la table suivante

| Valeur de $k_1$ | Valeur de $k_2$ | Valeur de $(2k_1+1)k_2$ modulo 8 | Adresse en hé-xadéci-male |
|---|---|---|---|
| 1 | 0 | 0 | 10 |
| 1 | 1 | 3 | 13 |
| 1 | 2 | 6 | 16 |
| 1 | 3 | 1 | 11 |
| 1 | 4 | 4 | 14 |
| 1 | 5 | 7 | 17 |
| 1 | 6 | 2 | 12 |
| 1 | 7 | 5 | 15 |

La table ci-dessus indique que, par exemple, on trouvera le terme $\overline{X}_{1,2}$ de la DFT $\overline{X}_{k_1,k_2}$ à l'adresse 16 de la mémoire 29.

On décrira maintenant en se référant à la figure 2 un exemple de réalisation du dispositif de calcul de transformée polynomiale 20. Dans un but de clarté on a supposé N=4. Le dispositif de la figure 2 comprend trois étages de decalage 30, 31 et 32 connectés en cascade. Dans l'exemple illustré, le bus de sortie 19 du registre 18 (figure 1) comprend quatre lignes 33, 34, 35 et 36 qui sont reliées respectivement à la position I de quatre commutateurs à deux positions 37, 38, 39 et 40 qui sont commandés simultanément par un signal sur une ligne 41. La ligne 33 est reliée à la position II du commutateur 38, la ligne 34 est reliée à la position II du commutateur 39; la ligne 35 est reliée à la position II du commutateur 40; la ligne 36 est reliée à travers un inverseur 42 à la position II du commutateur 37. Les sorties des commutateurs 37, 38, 39 et 40 sont reliées respectivement par des lignes 43, 44, 45 et 46 à la position I de quatre commutateurs 47, 48, 49 et 50. Ces quatre commutateurs sont commandés simultanément par un signal sur une ligne 51. La ligne 43 est reliée à la position II du commutateur 49; la ligne 44 est reliée à la position II du commutateur 50; la ligne 45 est reliée à travers un inverseur 52 à la position II du commutateur 47; la ligne 46 est reliée à travers un inverseur 53 à la position II du commutateur 48. Les sorties des commutateurs 47, 48, 49 et 50 sont reliées respectivement par des lignes 54, 55, 56 et 57 à la position I de quatre commutateurs 58, 59, 60 et 61 qui sont commandés simultanément par un signal sur une ligne 62. Les lignes 54, 55, 56 et 57 sont reliées respectivement à travers quatre inverseurs 63, 64, 65 et 66 à la position II des commutateurs 58, 59, 60 et 61. Les sorties des quatre commutateurs 58, 59, 60 et 61 sont appliquées respectivement à quatre accumulateurs 67, 68, 69 et 70 dont les sorties sont reliées aux quatre lignes du bus 22 (figure 1). Un circuit de décodage 71 reçoit des commandes de la mémoire de contrôle 11 par un bus 72 et a trois sorties reliées respectivement aux lignes 41, 51 et 62. On décrira maintenant le fonctionnement du dispositif de la figure 2 à l'aide d'un exemple. Le dispositif de la figure 2 reçoit successivement du registre 18 les polynômes $\overline{X}_{n_2}(Z)$ définis par la relation (8) et calcule la transformée polynomiale

$$\overline{X}_{(2k_1+1)k_2}(Z)= \sum_{n_2=0}^{N-1} X_{n_2}(Z) Z^{2n_2k_2} \text{ modulo } (Z^N+1) \qquad (13)$$

$\overline{X}_{(2k_1+1)k_2}$ est une transformée polynômiale de $N^2$ termes qui est calculée par des additions et des multiplications par puissances de Z. Puisque la relation (13) est définie modulo $(Z^N+1)$, on a $Z^N=-1$, et les multiplications par puissances de Z se réduisent à de simples rotations des termes de $X_{n_2}(Z)$ à l'intérieur du polynôme, suivies par une inversion de signe des termes qui dépassent la longueur du polynôme.

Soient les polynômes $X_{n_2}(Z)$, $n_2=0, 1, 2, 3$ suivants

$$X_0(Z)=b_{0,0}\, b_{1,0}\, b_{2,0}\, b_{3,0}$$

$$X_1(Z)=b_{0,1}\, b_{1,1}\, b_{2,1}\, b_{3,1}$$

$$X_2(Z)=b_{0,2}\, b_{1,2}\, b_{2,2}\, b_{3,2}$$

$$X_3(Z)=b_{0,3}\, b_{1,3}\, b_{2,3}\, b_{3,3}$$

(22)

En appliquant les relations (22), le dispositif de la figure 2 doit fournir les polynômes

pour $k_2=0$,

$$\overline{X}_0(Z)=X_0(Z)+X_1(Z)+X_2(Z)+X_3(Z)$$

pour $k_2=1$,

$$\overline{X}_{2k_1+1}(Z)=X_0(Z)+X_1(Z)Z^2+X_2(Z)Z^4+X_3(Z)Z^6$$

(23)

pour $k_2=2$

$$\overline{X}_{2(2k_1+1)}(Z)=X_0(Z)+X_1(Z)Z^4+X_2(Z)Z^8+X_3(Z)Z^{12}$$

pour $k_2=3$

$$\overline{X}_{3(2k_1+1)}(Z)=X_0(Z)+X_1(Z)Z^6+X_2(Z)Z^{12}+X_3(Z)Z^{18}$$

Puisque $Z^4=-1$, on a $Z^8=1$ et les relations (23) peuvent s'écrire:

$$\overline{X}_0(Z)=X_0(Z)+X_1(Z)+X_2(Z)+X_3(Z)$$

$$X_{2k_1+1}(Z)=X_0(Z)+X_1(Z)Z^2+X_2(Z)Z^4+X_3(Z)Z^6$$

$$\overline{X}_{2(2k_1+1)}(Z)=X_0(Z)+X_1(Z)Z^4+X_2(Z)+X_3(Z)Z^4$$

(24)

$$\overline{X}_{3(2k_1+1)}(Z)=X_0(Z)+X_1(Z)Z^6+X_2(Z)Z^4+X_3(Z)Z^2$$

En se référant à la figure 2, le polynôme $X_0(Z)$ est disponible dans le registre 18. Le circuit de décodage 71 reçoit de la mémoire de contrôle 11 une commande représentative de la valeur de l'exposant modulo 8 de Z dans la relation (18), c'est-à-dire représentative de la valeur de $2n_{2k_2}$ modulo 8. Au départ $k_2=0$, $n_2=0$ la commande sur le bus 72 est représentative de la valeur 0 et les lignes 41, 51 et 62 qui sont représentatives des poids binaires $2^0$, $2^1$ et $2^2$ sont à un niveau bas commandant les commutateurs 37 à 40, 47 à 50 et 58 à 61 en position I. Les termes $b_{0,0}$, $b_{1,0}$, $b_{2,0}$, $b_{3,0}$ de $X_0(Z)$ sont chargés directement dans les accumulateurs 67 à 70.

Le polynôme $X_1(Z)$ est alors disponible dans le registre 18. On a maintenant $k_2=0$ et $n_2=1$, la commande sur le bus 72 est toujours représentative de la valeur 0 et les termes $b_{0,1}$, $b_{1,1}$, $b_{2,1}$, $b_{3,1}$ de $X_1(Z)$ sont additionnés respectivement avec les termes $b_{0,0}$, $b_{1,0}$, $b_{2,0}$ et $b_{3,0}$ contenus dans les accumulateurs 67 à 70. Le processus continue. Après que $X_3(Z)$ ait été chargé dans le registre 18, on obtient dans les accumulateurs 67 à 70 les termes du polynôme $\overline{X}_0(Z)$ conformément aux relations (24). Ces termes sont chargés dans la mémoire 21 (figure 1) à travers le bus 22, et les accumulateurs 67 à 70 sont remis à zéro. On notera que les polynômes $X_{n_2}(Z)$ sont extraits de la mémoire 17 pout être chargés dans le registre au moyen d'opérations de lecture-écriture conventionnelles de telle sorte que ces polynômes ne soient pas effacés de la mémoire 17. Le polynôme $X_0(Z)$ est de nouveau extrait de la mémoire 17 et est ainsi disponible dans le registre 18. On a $k_2=1$, $n_2=0$ et la commande sur le bus 72 est représentative de la valeur 0 et les termes de $X_0(Z)$ sont chargés dans les accumulateurs 67 à 70. Le polynôme $X_1(Z)$ est alors disponible dans le registre 18. On a alors $k_2=1$ et $n_2=1$ et la commande sur le bus 72 est représentative de la valeur 2. Les lignes 41 et 62 sont alors respectivement à un niveau bas et la ligne 51 est à un niveau haut. Les commutateurs 37 à 40 et 58 à 61 sont en position I alors que les commutateurs 47 à 50 sont en position II. Le terme $b_{0,1}$ de $X_1(Z)$ est chargé dans l'accumulateur 69 à travers la ligne 33, le commutateur 37 en position I, la ligne 43, le commutateur 49 en position II, la ligne 56 et le commutateur 60 en position I. Le terme $b_{1,1}$ est de même chargé dans l'accumulateur 70. Le terme $b_{2,1}$ est inversé et chargé dans l'accumulateur 67 à travers la ligne 35, le commutateur 39 en position I, la ligne 45, l'inverseur 52, le commutateur 47 en position II, la ligne 54, et le commutateur 58 en position I. Le terme $b_{3,1}$ est de même inversé et chargé dans l'accumulateur 68. Le polynôme $X_2(Z)$ est alors disponible dans le registre 18. On a alors $k_2=1$ et $n_2=2$ et la commande sur le bus 72 est représentative de la valeur 4. Les lignes 41 et 51 sont à un niveau bas et la ligne 62 est à un niveau haut; les commutateurs 37 à 40 et 47 à 50 sont en position I, et les commutateurs 58 à 61 sont en position II. Les termes $b_{0,2}$, $b_{1,2}$, $b_{2,2}$ et $b_{3,3}$ sont inversés respectivement par les inverseurs 63 à 66 et chargés dans les accumulateurs 67 à 70. Le polynôme $X_3(Z)$ est alors disponible dans le registre 18. On a $k_2=1$ et $n_2=3$ et la commande sur le bus 72 est représentative de la valeur 6. La ligne 41 est à un niveau bas et les lignes 51 et 62 sont à un niveau haut. Les commutateurs 37 à 40 sont en position I et les commutateurs 47 à 50 et 58 à 61 sont en position II. Le terme $b_{0,3}$ est inversé par l'inverseur 65 et chargé dans l'accumulateur 69. Le terme $b_{1,3}$ est inversé par l'inverseur 66 et chargé dans l'accumulateur 70. Le terme $b_{2,3}$ est inversé deux fois par les inverseurs 52 et 63 et est donc chargé inchangé dans l'accumulateur 67. Le terme $b_{3,3}$ est inversé deux fois par les inverseurs 53 et 64 et est donc chargé inchangé dans l'accumulateur 68. On obtient alors dans les accumulateurs 62 à 70 les termes du polynôme $\overline{X}_{2k_1+1}(Z)$ conformément aux relations (24). Ces termes sont chargés dans la mémoire 21 à travers le bus 22 et les accumulateurs 67 à 70 sont remis à zéro.

L'homme de l'art comprendra qu'on obtient de façon semblable les termes des polynômes

$$\overline{X}_{2(2k_1+1)}(Z) \text{ et } \overline{X}_{3(2k_1+1)}(Z)$$

après deux autres cycles de décalage et d'accumulation.

L'exemple de réalisation du dispositif de calcul de transformée polynômiale 20, illustré sur la figure 2 n'est qu'un exemple parmi d'autres et l'homme de l'art comprendra que la transformée polynômiale définie par la relation (13) pourrait aussi être calculée par une décomposition du type transformée de Fourier rapide (en abrégé FFT).

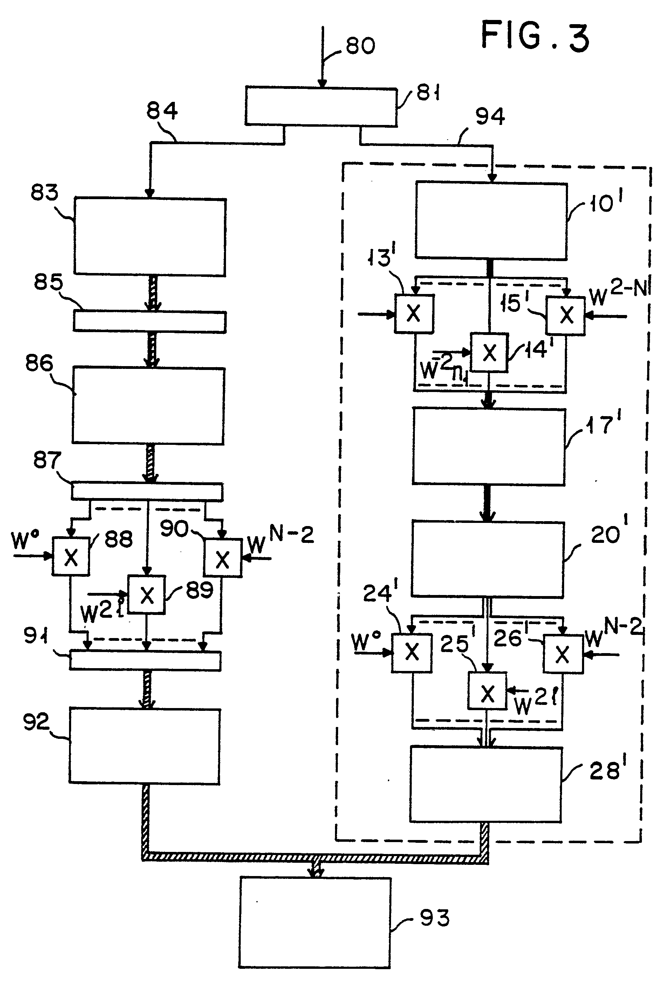

L'appareil de la figure 1 a l'avantage d'utiliser une seule transformation polynômiale au lieu de plusieurs comme proposé dans l'article précité de H. Nussbaumer et P. Quandalle paru dans "Proceedings of 1979 IEEE International Conference on Acoustics, Speech and Signal Processing". Copendant, la structure plus simple de l'appareil de la figure 1 est obtenue au prix d'un nombre légèrement supérieur d'opérations arithmétiques. Le second mode de réalisation de l'invention illustré sur la figure 3 offre un compromis entre la complexité de la structure de l'appareil et le nombre d'opérations arithmétiques. Ce second mode de réalisation utilise l'appareil de la figure 1 et la technique de réduction des polynômes décrite dans l'article dernièrement cité.

Avant de décrire l'appareil de la figure 3, on en décrira la théorie de fonctionnement. On remplace la représentation de la DFT $\overline{X}_{k_1,k_2}$ donnée par la relation (7 ou 8) par la représentation polynômiale équivalente suivante

$$x_{n_2}(Z) = \sum_{n_1=0}^{N-1} x_{n_1,n_2} Z^{n_1} \tag{25}$$

$$\overline{X}_{k_2}(Z) \equiv \sum_{n_2=0}^{N-1} X_{n_2}(Z) W^{2n_2k_2} \text{ Modulo } (Z^N-1) \tag{26}$$

$$\overline{X}_{k_1,k_2}(Z) \equiv \overline{X}_{k_2}(Z) \cdot \text{Modulo } (Z-W^{2k_1}) \tag{27}$$

$(2^N-1)$ est le produit des deux polynômes $(Z^{N/2}-1)$ et $(Z^{N/2}+1)$. On réduit chacun des polynômes $X_{n_2}(Z)$ de la relation (25) en un polynôme réduit noté $X_{n_2}^1(Z)$ de N/2 termes par une réduction modulo $(Z^{N/2}+1)$, et en un polynôme réduit noté $X_{n_2}^2(Z)$ de N/2 termes par une réduction modulo $(Z^{N/2}-1)$.

On rappellera que réduire modulo $(Z^{N/2}+1)$ le polynôme de N termes $X_{n_2}(Z)$, c'est construire le polynôme de N/2 termes

$$X^1{}_{n_2}(Z) = \sum_{n_1=0}^{N/2-1} (x_{n_1,n_2}-x_{n_1+N/2,n_2}) Z^{n_1}$$

Réduire modulo $(Z^{N/2}-1)$ ce même polynôme $X_{n_2}(Z)$, c'est construire le polynôme de N/2 termes

$$X^2_{n_2}(Z) = \sum_{n_1=0}^{N/2-1} (x_{n_1,n_2}+x_{n_1+N/2,n_2}) Z^{n_1}$$

10

On a en outre

$$Z^{N/2}+1= \prod_{k_1=0}^{N-1} (Z-W^{2k_1}) \text{ pour } k_1 \text{ impair}$$

$$Z^{N/2}-1= \prod_{k_1=0}^{N-1} (Z=W^{2k_1}) \text{ pour } k_1 \text{ pair.}$$

La représentation polynômiale des relations (25) à (27) peut se décomposer de la façon suivante:
Pour $k_1$ impair

$$X_{n_2}^1(Z)= \sum_{n_1=0}^{N/2-1} (x_{n_1,n_2}-x_{n_1+N/2,n_2}) Z^{n_1} \tag{28}$$

$$X_{k_2}^1(Z)\equiv \sum_{n_2=0}^{N-1} X_{n_2}^1(Z)W^{2n_2k_2} \text{ modulo } (Z^{N/2}+1) \tag{29}$$

$$\overline{X}_{k_1,k_2}\equiv\overline{X}_{k_2}^1(Z) \text{ modulo } (Z-W^{2k_1}) \tag{30}$$

Pour $k_1$ pair

$$X_{n_2}^2(Z)= \sum_{n_1=0}^{N/2-1} (x_{n_1,n_2}+x_{n_1+N/2,n_2}) Z^{n_1} \tag{31}$$

$$\overline{X}_{k_2}^2(Z)\equiv \sum_{n_2=0}^{N-1} X_{n_2}^2(Z)W^{2n_2k_2} \text{ modulo } (2^{N/2}-1) \tag{32}$$

$$\overline{X}_{k_1,k_2}\equiv\overline{X}_{k_2}^2(Z) \text{ modulo } (Z-W^{2k_1}) \tag{33}$$

On traitera d'abord le cas $k_1$ impair.

Puisque N est une puissance de 2 et $k_1$ est impair, N et $k_1$ sont premiers relatifs et le produit $k_1k_2$ modulo N prend une fois et une seule fois toutes les valeurs de $k_2$. Le produit $k_1k_2$ modulo N est une simple permutation des indices $k_2$. On peut ainsi remplacer $k_2$ par $k_1k_2$ dans les relations (29) et (30) et on obtient respectivement les relations équivalentes (34) et (35).

$$\overline{X}_{k_1k_2}^1(Z)\equiv \sum_{n_2=0}^{N-1} X_{n_2}^1(Z)W^{2n_2k_1k_2} \text{ modulo } (Z^{N/2}+1) \tag{34}$$

$$\overline{X}_{k_1,k_1k_2}\equiv\overline{X}_{k_1k_2}^1 \text{ modulo } (Z-W^{2k_1}) \tag{35}$$

Puisque d'après (35), $\overline{X}_{k_1k_2}^1$ est défini modulo $(Z-W^{2k_1})$, on a $Z=W^{2k_1}$ et on peut remplacer $W^{2k_1}$ par Z dans la relation (34), qui devient

$$\overline{X}_{k_1k_2}^1(Z)= \sum_{n_2=0}^{N-1} X_{n_2}^1(Z) Z^{n_2k_2} \text{ modulo } (Z^{N/2}+1) \tag{36}$$

$\overline{X}_{k_1k_2}^1(Z)$ est un polynôme de N/2 termes que l'on peut écrire

$$\overline{X}_{k_1k_2}^1= \sum_{l=0}^{N/2-1} u_{k_1k_2,l} Z^l \tag{37}$$

En reportant (37) dans (35) on obtient

$$\overline{X}_{k_1,k_1k_2}= \sum_{l=0}^{N/2-1} u_{k_1k_2,l} Z^l \text{ modulo } (Z-W^{2k_1}) \tag{38}$$

11

Puisque $Z=W^{2k_1}$, la relation (38) peut s'écrire

$$\overline{X}_{k_1,k_1k_2}=\sum_{l=0}^{N/2-1} u_{k_1k_2,l} \, W^{2lk_1} \tag{39}$$

Puisque $k_1$ est impair, on peut poser

$$k_1=2p+1 \quad p=0, 1, ..., N/2-1$$

La relation (39) s'écrit alors

$$\overline{X}_{(2p+1),(2p+1)k_2}=\sum_{l=0}^{N/2-1} u_{(2p+1)k_1,l} \, W^{2l}W^{4pl} \tag{40}$$

La relation (40) correspond à une DFT unidimensionnelle des $N/2$ termes de

$$u_{(2p+1)k_2,l} \, W^{2l}.$$

Les $N/2$ termes de la DFT $\overline{X}_{(2p+1),k_2}$ pour $p=0, 1, ..., N/2-1$ et $k_2=0, 1, ..., N-1$, c'est-à-dire les termes de $\overline{X}_{k_1,k_2}$ qui correspondant à $k_1$ impair, seront obtenus par une simple permutation des termes de

$$\overline{X}_{(2p+1),(2p+1)k_2}$$

qui fait passer du couple d'indices $(2p+1)$, $(2p+1)k_2$ au couple d'indices $(2p+1),k_2$.

On traitera maintenant le cas $k_1$ pair.

On remplace la représentation donnée pour les relations (31) à (33) par la représentation équivalente suivante:

$$X_{n_2}^{20}(Z)=\sum_{n_2=0}^{N/2-1} (x_{n_1,n_2}+x_{n_1+N/2,n_2}) \, W^{-2n_1} Z^{n_1} \tag{41}$$

$$\overline{X}_{k_2}^{2}(Z)\equiv\sum_{n_2=0}^{N-1} X_n^{20}(Z) \, W^{2n_2k_2} \text{ modulo } (Z^{N/2}+1) \tag{42}$$

$$\overline{X}_{k_1,k_2}\equiv\overline{X}_{k_2}^{2}(Z) \text{ modulo } (Z-W^{2(2k_1+1)}) \tag{43}$$

Puisque N est une puissance de 2, et $(2k_1+1)$ est impair, comme vu plus haut, on peut remplacer $k_2$ par $(2k_1+1)k_2$ dans les relations (42) et (43) et on obtient les relations équivalentes

$$\overline{X}_{(2k_1+1)k_2}^{2}(Z)\equiv\sum_{n_2=0}^{N-1} X_{n_2}^{20}(Z)W^{2n_2k_2(2k_1+1)} \text{ modulo } (Z^{N/2}+1) \tag{44}$$

$$\overline{X}_{k_1,(2k_1+1)k_2}\equiv\overline{X}_{(2k_1+1)k_2}^{2}(Z) \text{ modulo } (Z-W^{2(2k_1+1)}) \tag{45}$$

Puisque d'après (45) on a $Z=W^{2(2k_1+1)}$, la relation (44) devient

$$\overline{X}_{(2k_1+1)k_2}^{2}(Z)=\sum_{n_2=0}^{N-1} X_{n_2}^{20}(Z)Z^{n_2k_2} \text{ modulo } (Z^{N/2}+1) \tag{46}$$

$\overline{X}_{(2k_1+1)k_2}^{2}(Z)$ est un polynôme de $N/2$ termes que l'on peut écrire

$$\overline{X}_{(2k_1+1)k_2}^{2}(Z)=\sum_{l_s0}^{N/2-1} v_{(2k_1+1)k_2,l} \, Z^{l} \tag{47}$$

En reportant (47) dans (45) on obtient

$$\overline{X}_{k_1,(2k_1+1)k_2}=\sum_{l=0}^{N/2-1} v_{(2k_1+1)k_2,l} \, Z^{l} \text{ modulo } (Z-W^{(2k_1+1)}) \tag{48}$$

Puisque $Z = W^{2(2k_1+1)}$, la relation (48) peut s'écrire

$$\overline{X}_{k_1,(2k_1+1)k_2} = \sum_{l=0}^{N/2-1} V_{(2k_1+1)k_2,l}\, W^{2l(2k_1+1)} \tag{49}$$

ou

$$\overline{X}_{k_1,(2k_1+1)k_2} = \sum_{l=0}^{N/2-1} V_{(2k_1+1)k_2,l}\, W^{2l} W^{4lk_1} \tag{50}$$

Puisque $k_1$ est pair, on peut poser

$$k_1 = 2p \quad p = 0, 1, \ldots, N/2-1$$

et la relation (50) s'écrit

$$\overline{X}_{2p,(4p+1)k_2} = \sum_{l=0}^{N/2-1} V_{(4p+1)k_2,l}\, W^{2l} W^{8pl} \tag{51}$$

La relation (51) correspond à une DFT unidimensionnelle des $N/2$ termes $V_{(2p+1)k_2,l}\, W^{2l}$.

Les $N^2/2$ termes de la DFT $\overline{X}_{2p,k_2}$ pour $p = 0, 1, \ldots, N/2-1$ et $k_2 = 0, 1, \ldots, N-1$, c'est-à-dire les termes de $\overline{X}_{k_1,k_2}$ qui correspondent à $k_1$ pair, seront obtenus par une simple permutation des termes de $\overline{X}_{2p,(4p+1)k_2}$ qui fait passer du couple d'indices $2p,(4p+1)k_2$ au couple d'indices $2p,k_2$.

On décrira maintenant en se référant à la figure 3 le second mode de réalisation de l'invention. Comme dans l'exemple de la figure 1 on supposera qu'on ait à calculer la DFT bidimensionnelle

$$\overline{X}_{k_1,k_2} \quad k_1, k_2 = 0, 1, \ldots, N-1$$

d'une image définie par les $N \times N$ échantillons

$$x_{n_1,n_2} \quad n_1, n_2 = 0, 1, \ldots, N-1.$$

Les $N^2$ termes de la DFT $\overline{X}_{k_1,k_2}$ comprennent les $N^2/2$ termes de la DFT notée

$$\overline{X}_{(2p+1),k_2} \quad p = 0, 1, \ldots, N/2-1$$

correspondant à $k_1$ impair, et les $N^2/2$ termes de la DFT notée $\overline{X}_{2p,k_2}$ correspondant à $k_1$ pair.

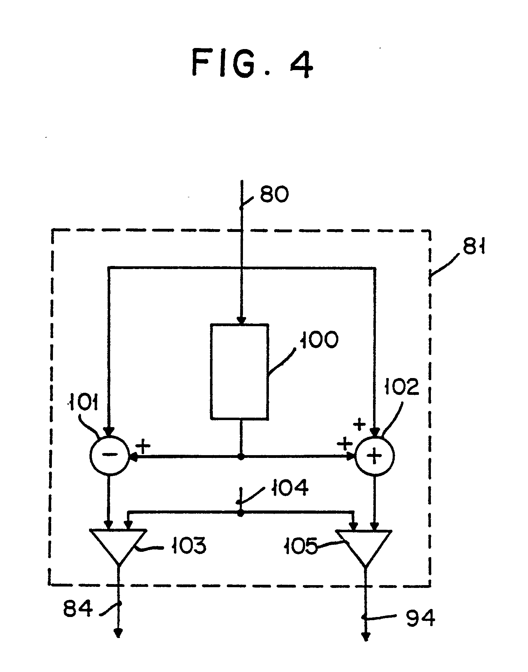

Les échantillons $x_{n_1,n_2}$ provenant par exemple d'une mémoire d'échantillons comme dans l'appareil de la figure 1, sont appliqués par une ligne 80, rangée par rangée à un dispositif de réduction 81 qui sera décrit en détail en référence à la figure 4. Le dispositif de réduction 81 réduit chaque rangée de N échantillons en:

. un polynôme de $N/2$ termes $X_{n_2}^1(Z)$ tel que défini par la relation (28), et
. un polynôme de $N/2$ termes $X_{n_2}^2(Z)$ tel que défini par la relation (31).

Les termes des polynômes $X_{n_2}^1(Z)$, $n_2 = 0, 1, \ldots, N-1$ à partir desquels sont calculés les $N^2/2$ termes de la DFT $\overline{X}_{k_1,k_2}$ qui correspondent à $k_1$ impair, sont mémorisés dans une mémoire 83 à travers une ligne 84.

Les N polynômes $X_{n_2}^1(Z)$ sont extraits séquentiellement de la mémoire 83 et chargés dans un registre à $N/2$ étages 85. Les polynômes $X_{n_2}^1(Z)$ contenus dans le registre 85 sont appliqués séquentiellement à un dispositif 86 qui calcule la transformée polynômiale $\overline{X}_{k_1k_2}^1(Z)$ conformément à la relation (36) rappelée ci-dessous:

$$\overline{X}_{k_1k_2}^1(Z) = \sum_{n_2=0}^{N-1} X_{n_2}^1(Z)\, Z^{n_2 k_2} \text{ modulo } (Z^{N/2}+1) \tag{36}$$

que l'on peut écrire

$$\overline{X}_{(2p+1)k_2}^1(Z) = \sum_{n_2=0}^{N-1} X_{n_2}^1(Z) Z^{n_2 k_2} \text{ modulo } (Z^{N/2}+1) \tag{52}$$

Le dispositif 86 est bien sûr semblable au dispositif de calcul de transformée polynômiale 20 (figure 1) dont on a décrit un exemple de réalisation en référence à la figure 2. Comme vu plus haut, $\overline{X}1_{(2p+1)k_2}$ représente N polynômes de N/2 termes chacun et chaque polynôme peut être représenté par la relation suivante qui est identique à la relation (37).

$$\overline{X}1_{(2p+1)k_2}= \sum_{l=0}^{N/2-1} u_{(2p+1)k_2,l}\, Z^l \tag{53}$$

Les polynômes $\overline{X}1_{(2p+1)k_2}(Z)$ sont chargés séquentiellement dans un registre à N/2 étages 87. Les N/2 termes d'un même polynôme $\overline{X}1_{(2p+1)k_2}(Z)$, c'est-à-dire les N/2 termes

$$u_{(2p+1)k_2,0},\ \ldots,\ u_{(2p+1)k_2,l},\ \ldots,\ u_{(2p+1)k_2,N/2-1}$$

contenus dans le registre 87 sont appliqués respectivement à N/2 multiplicateurs complexes 88, ..., 89, ..., 90, où ils sont multipliés respectivement, par les quantités

$$W^0,\ \ldots,\ W^{2l},\ \ldots,\ W^{2(N/2-1)}.$$

On obtient respectivement à la sortie de ces N/2 multiplicateurs les N/2 termes suivants:

$$u_{(2p+1)k_2,0}\, W^0,\ \ldots,\ u_{(2p+1)k_2,l}\, W^{2l},\ \ldots,\ u_{(2p+1)k_2,N/2-1}\, W^{2(N/2-1)}$$

qui sont chargés dans un registre à N/2 étages 91. Ces N/2 termes contenus dans le registre 91 sont appliqués à un dispositif de calcul de DFT unidimensionnelle 92 qui calcule les N/2 termes de le DFT

$$\sum_{l=0}^{N/2-1} u_{(2p+1)k_2,l}\, W^{2l} e^{-j\pi/N(4pl)}$$

qui est la DFT $\overline{X}_{(2p+1)l,(2p+1)k_2}$ de la relation (40).

Ces N/2 termes de DFT sont stockés dans une mémoire 93, chacun de ces termes étant stocké dans une position de mémoire dont l'adresse est représentative de la valeur du couple d'indices $(2p+1)$, $(2p+1)k_2$ correspondant à ce terme, comme vu plus haut en référence à la figure 1. Le dispositif 92 fournit N/2 termes à partir de chacun des N polynômes disponibles successivement dans le registre 91. Lorsque ces N polynômes auront été traités par le dispositif de calcul de DFT 92, celui-ci aura fourni les $N^2/2$ termes de la DFT bidimensionnelle $\overline{X}_{k_1,k_2}$ qui correspondent à $k_1$ impair. Ces termes seront disponibles dans la mémoire 93.

On décrira maintenant comment sont traités les polynômes $X^2_{n_2}(Z)$ à partir desquels sont calculés les termes de la DFT $\overline{X}_{k_1,k_2}$ correspondant à $k_1$ pair.

Les polynômes $X^2_{n_2}(Z)$ fournis par le dispositif de réduction 81 sont traités par un appareil semblable à celui de la figure 1. Par souci de clarté, dans la figure 3, on a encadré en pointillé l'appareil semblable à celui de la figure 1 et pour désigner les éléments de la figure 3 qui se retrouvent dans la figure 1 on a utilisé les mêmes références surmontées d'un prime. (Dans un souci de simplification les divers registres 12, 16, ..., de la figure 1 n'ont pas été reproduits dans l'appareil équivalent de la figure 3). Les polynômes $X^2_{n_2}(Z)$ fournis par le dispositif de réduction 81 sont mémorisés dans une mémoire 10' à travers une ligne 94.

Les N/2 termes d'un même polynôme $X^2_{n_2}(Z)$ disponibles dans la mémoire 10' sont appliqués respectivement aux N/2 multiplicateurs complexes 13', ..., 14', ..., 15', où ils sont multipliés respectivement par les quantités

$$W^0,\ \ldots,\ W^{-2n_1},\ \ldots,\ W^{-2(N/2-1)}.$$

(Sur la figure on a écrit $W^{-2(N/2-1)}$ sous la forme $W^{2-N}$).

Après multiplication terme à terme par chacune des quantités ci-dessous, chacun des polynômes $X^2_{n_2}(Z)$ est transformé en un polynôme $X^{20}_{n_2}(Z)$ défini par la relation (41) rappelée ci-dessous.

$$X^{20}_{n_2}(Z)= \sum_{n_2=0}^{N/2-1} (x_{n_1,n_2}+x_{n_1+N/2,n_2})\, W^{-2n_1} Z^{n_1} \tag{41}$$

Les polynômes $X^{20}_{n_2}(Z)$ fournis successivement par les multiplicateurs 13', ..., 14', ..., 15', sont mémorisés dans une mémoire 17'. Les polynômes $X^{20}_{n_2}(Z)$ sont appliqués séquentiellement à un dispositif 20' qui calcule la transformée polynômiale $\overline{X}^2_{(2k_1+1)k_2}(Z)$ conformément à la relation (46),

rappelée ci-dessous:

$$\overline{X}^2_{(2k_1+1)k_2}(Z)= \sum_{n_2=0}^{N-1} X^{20}_{n_2}(Z)Z^{n_2k_2} \text{ modulo } (Z^{N/2}+1) \tag{46}$$

Puisque $k_1=2p$, $p=0, 1, \ldots, N/2-1$, la relation (46) est identique à la relation suivante:

$$\overline{X}^2_{(4p+1)k_2}(Z)= \sum_{n_1=0}^{N-1} X^{20}_{n_2}(Z)Z^{n_2k_2} \text{ modulo } (Z^{N/2}+1)$$

Le dispositif 20' est bien sûr similaire au dispositif 20 de la figure 1.

Comme vu plus haut $\overline{X}^2_{(4p+1)k_2}(Z)$ représente N polynômes de N/2 termes chacun, et chaque polynôme peut être représenté par la relation suivante qui est identique à la relation (47).

$$\overline{X}^2_{(4p+1)k_2}(Z)= \sum_{l=0}^{N/2-1} v_{(4p+1)k_2,l} Z^l \tag{54}$$

Les N/2 termes de chacun des N polynômes $\overline{X}^2_{(4p+1)k_2}(Z)$ fournis successivement par le dispositif 20' sont respectivement multipliés par les quantités

$$W^0, \ldots, W^{2l}, \ldots, W^{2(N/2-1)}$$

(Sur la figure, on a écrit $W^{2(N/2-1)}$ sous la forme $W^{N-2}$).
dans les N/2 multiplicateurs 24', ..., 25', ..., 26'.
On obtient respectivement à la sortie de ces N/2 multiplicateurs les N/2 termes suivants:

$$v_{(4p+1)k_2,0} W^0, \ldots, v_{(4p+1)k_2,l} W^{2l} \ldots v_{(4p+1)k_2,N/2-1} W^{2(N/2-1)}$$

qui sont appliqués à un dispositif de calcul de DFT unidimensionnelle 28' qui calcule les N/2 termes de la DFT

$$\sum_{l=0}^{N/2-1} v_{(4p+1)k_2,l} W^{2l} e^{-j\pi/N(8pl)}$$

qui est la DFT $\overline{X}_{2p,(4p+1)k_2}$ de la relation (52).

Ces N/2 termes de DFT sont stockés dans la mémoire 93, chacun de ces termes étant stocké dans une position de mémoire dont l'adresse est représentative de la valeur du couple d'indices $2p, (4p+1)k_2$ correspondant à ce terme, comme vu plus haut en référence à la figure 1.

L'homme de l'art comprendra que l'appareil de la figure 3 sera géré par une mémoire de contrôle qu'on n'a pas représenté sur la figure par simplification. Cette mémoire de contrôle commandera la lecture des termes de $\overline{X}_{k_1,k_2}$ de la mémoire 93 en tenant compte des permutations d'indice. Pour $k_1$ impair on aura la permutation

$$k_1,k_2 \rightarrow (2p+1), (2p+1)k_2$$

avec $k_1=2p+1$, $p=0, 1, \ldots, N/2-1$.

Pour $k_1$ pair on aura la permutation

$$k_1,k_2 \rightarrow 2p, (4p+1)k_2$$

avec $k_2=2p$, $p=0, 1, \ldots, N/2-1$.
La mémoire de contrôle commandera la lecture des termes stockés dans la mémoire 93 à l'aide de tables dont on donnera un exemple ci-dessous. On supposera que N=8 et qu'on veuille lire les 8 termes de $\overline{X}_{k_1,k_2}$ correspondant à $k_2=1$ et $k_1=0, 1, \ldots, 7$.
On aura la table suivante:

| $k_1$ | $k_2$ | $2p$ | $2p+1$ | $(2p+1),(2p+1)k_2$ modulo 8 | $2p,(4p+1)k_2$ modulo 8 | Adresse en héxadécimal |
|---|---|---|---|---|---|---|
| 0 | 1 | 0 | — | — | 0,1 | 01 |
| 1 | 1 | — | 1 | 1,1 | — | 11 |
| 2 | 1 | 2 | — | — | 2,5 | 25 |
| 3 | 1 | — | 3 | 3,3 | — | 33 |
| 4 | 1 | 4 | — | — | 4,1 | 41 |
| 5 | 1 | — | 5 | 5,5 | — | 55 |
| 6 | 1 | 6 | — | — | 6,5 | 65 |
| 7 | 1 | — | 7 | 7,7 | — | 77 |

La table ci-dessus indique que, par exemple, on trouvera le terme $\overline{X}_{1,1}$ de la DFT $\overline{X}_{k1,k2}$ à l'adresse 11 de la mémoire 93 et le terme $\overline{X}_{6,1}$ de la DFT $\overline{X}_{k1,k2}$ à l'adresse 65 de cette mémoire.

On décrira maintenant en se référant à la figure 4 un exemple de réalisation du dispositif de réduction 81 de la figure 2.

Les échantillons $x_{n1,n2}$ sont appliqués par la ligne 80 à l'entrée d'un élément de retard 100 qui introduit un retard égal à N/2 fois l'intervalle de temps qui sépare l'application de deux échantillons consécutifs sur la ligne 80. La ligne 80 est reliée à l'entrée (—) d'un soustracteur 101 dont l'entrée (+) est reliée à la sortie de l'élément de retard 100. La ligne 80 est en outre reliée à une entrée d'un additionneur 102 dont l'autre entrée est reliée à la sortie de l'élément de retard 100. La sortie du soustracteur 101 est reliée à une entrée d'une porte ET 103 dont l'autre entrée est reliée à une ligne 104. La sortie de l'additionneur 102 est reliée à une entrée d'une porte ET 105 dont l'autre entrée est reliée à la ligne 104. Les sorties des portes ET 103 et 105 sont reliées respectivement aux lignes 84 et 94 (figure 3).

En fonctionnement, les échantillons sont appliquée à la ligne 80 en série, rangée par rangée.

Pendant que les N/2 premiers échantillons de chaque rangée, c'est-à-dire les échantillons $x_{n1,n2}$ pour $n_1=0, 1, ..., N/2-1$, sont appliqués à la ligne 80, la ligne 104 est à un niveau bas qui rend non conductrices les portes ET 103 et 105. Pendant que les N/2 derniers échantillons de chaque rangée, c'est-à-dire les échantillons $x_{n1+N/2,n2}$ pour $n_1=0, 1, ..., N/2-1$, sont appliqués à la ligne 80, la ligne 104 est à un niveau haut qui rend conductrices les portes ET 103 et 105. Lorsque l'échantillon $x_{n1+N/2,n2}$ est appliqué à la ligne 80 l'échantillon $x_{n1,n2}$ est disponible à la sortie de l'élément de retard 100, et on obtient respectivement sur les lignes 84 et 94 les termes $(x_{n1,n2}-x_{n1+N/2,n2})$ et $(x_{n1,n2}+x_{n1+N/2,n2})$. On obtient ainsi séquentiellement sur les lignes 84 et 94 les termes des polynômes $X^1_{n2}(Z)$ et $X^2_{n2}(Z)$ définis respectivement par les relations (28) et (31).

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Appareil pour calculer la transformée de Fourier discrète bidimensionnelle, notée $\overline{X}_{k1,k2}$ avec $k_1$, $k_2=0, 1,..., N-1$ de $N^2$ termes $x_{n1,n2}$ répartis en N premiers blocs de N termes chacun, les indices $n_2$ et $n_1$ indiquant respectivement le numéro du bloc et la position du terme dans le bloc, et N étant égal à une puissance de 2, du type dans lequel le problème bidimensionnel est converti en un problème unidimensionnel par des multiplications au moins une transformations polynomiale caractérisé en ce qu'il comprend:

— des moyens pour recevoir lesdits N premiers blocs de N termes,
— des premiers moyens de multiplication (13—15) pour multiplier respectivement les N termes de chacun des N premiers blocs par N premiers coefficients égaux respectivement à $W^{-n1}$ où $W=e^{-j\pi/N}$ et fournir ainsi N seconde blocs de N termes, notés $X_{n2}(Z)$,

16

— des moyens de transformation (20) pour déterminer à partir des N seconds blocs, N troisièmes blocs de N termes, notés $\overline{X}_{(2k_1+1)k_2}(Z)$ conformément à la transformation polynomiale définie par la relation:

$$\overline{X}_{(2k_1+1)k_2}(Z)= \sum_{n_2=0}^{N-1} X_{n_2}(Z)\, Z^{2n_2k_2} \text{ modulo } (Z^N+1)$$

où $(2k_1+1)k_2$ est pris modulo N,

— des seconds moyens de multiplication (24—26) pour multiplier respectivement les N termes de chacun des N troisièmes blocs par N seconds coefficients égaux respectivement à $W^l$ où l varie de 0 à N—1 et est indicatif de la position du terme dans le bloc, et fournir ainsi N quatrièmes blocs et N termes, et

— des moyens (28) pour calculer les N termes de la transformée de Fourier discrète unidimensionnelle de chacun desdits N quatrièmes blocs de N termes, et fournir ainsi les $N^2$ termes de la transformée de Fourier discrète bidimensionnelle desdits N premiers blocs de N termes.

2. Appareil pour calculer la transformée de Fourier discrète bidimensionnelle, notée $\overline{X}_{k_1,k_2}$ avec $K_1$, $k_2=0, 1,..., N-1$ de $N^2$ termes $x_{n_1,n_2}$ répartis en N premiers blocs de N termes chacun, les indices $n_2$ et $n_1$ indiquant respectivement le numéro du bloc et la position du terme dans le bloc, et N étant égal à une puissance de 2, du type dans lequel le problème bidimensionnel est converti en un problème unidimensionnel par des multiplications et des transformatraus polynômiales en réduisant chacun des N premiers blocs en un premier block réduit de N/2 termes, noté $X^1_{n_2}(\overline{Z})$ par une réduction modulo $(Z^{N/2}+1)$ et en un second bloc réduit de N/2 termes, noté $X^2_{n_2}(Z)$, par une réduction modulo $(Z^{N/2}-1)$, et dans lequel les termes de la transformée de Fourier $\overline{X}_{k_1k_2}$ correspondants à $k_1$ impair et pair sont dérivés respectivement des N premiers et seconds blocs réduits, caractérisé en ce qu'il comprend:

— des premiers moyens de multiplication (13'—15') pour multiplier respectivement les N/2 termes de chacun des N seconds blocs réduits par N/2 premiers coefficients égaux respectivement à $W^{-2n_1}$, et fournir ainsi N troisièmes blocs réduits de N/2 termes, notés

$$X^{20}_{n_2}(Z)= \sum_{n_2=0}^{N/2-1} (x_{n_1,n_2}+x_{n_1+N/2,n_2})W^{-2n_1}Z^{n_1}$$

— des premiers moyens de transformation (20') pour déterminer à partir des N troisièmes blocs réduits, N quatrièmes blocs de N/2 termes, notés $\overline{X}^2_{(2k_1+1)k_2}(Z)$ conformément à la transformation polynomiale définie par la relation:

$$\overline{X}^2_{(2k_1+1)k_2}(Z)= \sum_{n_2=0}^{N-1} X^{20}_{n_2}(Z)\, Z^{n_2k_2} \text{ modulo } (Z^{N/2}+1)$$

où $k_1$ est pair et où le produit $(2k_1+1)k_2$ est pris modulo N,

— des seconds moyens de multiplication (24'—26') pour multiplier respectivement des N/2 termes de chacun des N quatrièmes blocs réduits par N/2 coefficients égaux respectivement à $W^{2l}$ où l varie de 0 à N/2—1 et est indicatif de la position du terme dans le bloc, et fournir ainsi N cinquièmes blocs réduits de N/2 termes,

— des moyens (28') pour calculer les N/2 termes de la transformée de Fourier discrète unidimensionnelle de chacun desdits N cinquièmes blocs réduits, et fournir ainsi les termes de la transformée de Fourier discrète bidimensionnelle $\overline{X}_{k_1,k_2}$ qui correspondent à $k_1$ pair,

— des seconds moyens de transformation (86) pour déterminer à partir des N premiers blocs réduits, N sixièmes blocs réduits de N/2 termes, notés $\overline{X}^1_{k_1k_2}(Z)$ conformément à la transformation polynomiale définie par la relation

$$\overline{X}^1_{k_1k_2}(Z)= \sum_{n_2=0}^{N-1} X^1_{n_2}(Z)\, Z^{n_2k_2} \text{ modulo } (Z^{N/2}+1)$$

où $k_1$ est impair et le produit $k_1k_2$ est pris modulo N,

— des troisièmes moyens de multiplication (88—90) pour multiplier respectivement les N/2 termes de chacun des N sixièmes blocs réduits par N/2 coefficients égaux respectivement à $W^{2l}$, et fournir ainsi N septièmes blocs réduits de N/2 termes, et

— des moyens (92) pour calculer les N/2 termes de la transformée de Fourier discrète unidimensionnelle de chacun desdits N septièmes blocs réduits, et fournir ainsi les termes de la transformée de Fourier discrète bidimensionnelle $\overline{X}_{k_1,k_2}$ qui correspondent à $k_1$ impair.

**Patentansprüche**

1. Vorrichtung zur Berechnung der diskreten bidimensionalen Fourier-Transformierten, bezeichnet $\overline{X}_{k_1,k_2}$ mit $k_1$, $k_2=0$, 1,..., N−1 von $N^2$ Gliedern $nx_{n_1,n_2}$, aufgeteilt in N erste Blöcke von jeweils N Gliedern, wobei die Indexe $n_2$ und $n_1$ jeweils die Nummer des Blockes und die Position des Gliedes in dem Block angeben und N gleich einer Potenz von 2 ist, von dem Typ, in dem das bidimensionale Problem durch Multiplikationen und zumindest eine polynomiale Transformation in ein eindimensionales Problem umgewandelt wird, dadurch gekennzeichnet, dass sie enthält:

— Mittel zur Aufnahme der genannten N ersten Blöcke von N Gliedern,

— Erste Multiplikationsmittel (13—15) zum Multiplizieren der jeweils N Glieder eines jeden der N ersten Blöcke mit N ersten Koeffizienten, die jeweils gleich $W^{-n_1}$ sind, worin $W=e^{-j\pi/N}$, und somit zur Erstellung von N zweiten Blöcken von N Gliedern, bezeichnet $X_{n_2}(Z)$,

— Transformationsmittel (20) um, ausgehend von den N zweiten Blöcken, N dritte Blöcke von N Gliedern zu bestimmen, bezeichnet $\overline{X}_{(2k_1+1)k_2}(Z)$, entsprechend der polynomialen Transformation, definiert durch die Beziehung:

$$\overline{X}_{(2k_1+1)k_2}(Z)= \sum_{n_2=0}^{N-1} X_{n_2}(Z)\, Z^{2n_2k_2} \text{ modulo } (Z^N+1)$$

in der $(2k_1+1)k_2$ modulo N genommen wird,

— zweite Multiplikationsmittel (24—26) zum Multiplizieren der jeweils N Glieder eines jeden der N dritten Blöcke mit N zweiten Koeffizienten, die jeweils gleich $W^l$ sind, worin $l$ sich von 0 bis N−1 verändert und die Position des Gliedes in dem Block anzeigt, und somit zur Erstellung von N vierten Blöcken von N Gliedern, und

— Mittel (28) zur Berechnung der N Glieder der diskreten eindimensionalen Fourier-Transformierten eines jeden der genannten N vierten Blöcke von N Gliedern und somit zur Erstellung der $N^2$ Glieder der diskreten bidimensionalen Fourier-Transformierten der genannten N ersten Blöcke von N Gliedern.

2. Vorrichtung zur Berechnung der diskreten bidimensionalen Fourier-Transformierten, bezeichnet $\overline{X}_{k_1,k_2}$ mit $k_1$, $k_2=0$, 1, ..., N−1 von $N^2$ Gliedern $x_{n_1,\,n_2}$, aufgeteilt in N erste Blöcke von jeweils N Gliedern, wobei die Indexe $n_2$ und $n_1$ jeweils die Nummer des Blockes und die Position des Gliedes in dem Block angeben und N gleich einer Potenz von 2 ist, von dem Typ, in dem das bidimensionale Problem durch Multiplikationen und polynomiale Transformationen in ein eindimensionales Problem umgewandelt wird, wobei jeder der N ersten Blöcke durch eine modulo-Reduktion $(Z^{N/2}+1)$ in einen ersten reduzierten Block von N/2 Gliedern, bezeichnet $X^1_{n_2}(Z)$ und durch eine modulo-Reduktion $(Z^{N/2}-1)$ in einen zweiten reduzierten Block von N/2 Gliedern, bezeichnet $X^2_{n_2}(Z)$, reduziert wird und in dem die Glieder der Fourier-Transformierten $\overline{X}_{k_1,\,k_2}$ entsprechend $k_1$ ungerade und gerade von jeweils den N ersten und zweiten reduzierten Blöcken abgeleitet sind, dadurch gekennzeichnet, dass sie enthält:

— erste Multiplikationsmittel (13'—15') zum Multiplizieren der jeweils N/2 Glieder eines jeden der N zweiten reduzierten Blöcke mit N/2 ersten Koeffizienten, die jeweils gleich $W^{-2n_1}$ sind, und somit zur Erstellung von N dritten reduzierten Blöcken von N/2 Gliedern, bezeichnet:

$$X^{20}_{n_2}(Z)= \sum_{n_2=0}^{N/2-1} (x_{n_1,n_2}+x_{n_1+N/2,n_2})W^{-2n_1}Z^{n_1}$$

— erste Transformationsmittel (20') um, ausgehend von den N dritten reduzierten Blöcken, N vierte reduzierte Blöcke von N/2 Gliedern zu bestimmen, bezeichnet $\overline{X}^2_{(2k_1+1)k_2}(Z)$ entsprechend der polynomialen Transformation, definiert durch die Beziehung:

$$\overline{X}^2_{(2k_1+1)k_2}(Z)= \sum_{n_2=0}^{N-1} X^{20}_{n_2}(Z)\, Z^{n_2k_2} \text{ modulo } (Z^{N/2}+1)$$

in der $k_1$ gerade ist und worin das Produkt $(2k_1+1)k_2$ modulo N genommen wird,

— zweite Multiplikationsmittel (24'—26') zum Multiplizieren der jeweils N/2 Glieder eines jeden der N vierten reduzierten Blöcke mit N/2 Koeffizienten, die jeweils gleich $W^{2l}$ sind, worin l sich von 0 bis N/2—1 verändert und die Position des Gliedes in dem Block anzeigt, und somit zur Erstellung von N fünften reduzierten Blöcken von N/2 Gliedern,

— Mittel (28') zur Berechnung der N/2 Glieder der diskreten eindimensionalen Fourier-Transformierten eines jeden der genannten N fünften reduzierten Blöcke und somit zur Erstellung der Glieder der diskreten bidimensionalen Fourier-Transformierten $\overline{X}_{k_1,k_2}$, die $k_1$ gerade entspricht,

— zweite Transformationsmittel (86) um, von den N ersten reduzierten Blöcken ausgehend, N sechste reduzierte Blöcke von N/2 Gliedern zu bestimmen, bezeichnet $\overline{X}^1_{k_1\ k_2}(Z)$ entsprechend der polynomialen Transformation, definiert durch die Beziehung:

$$\overline{X}^1_{k_1k_2}(Z)= \sum_{n_2=0}^{N-1} X^1_{n_2}(Z)\, Z^{n_2k_2} \text{ modulo } (Z^{N/2}+1)$$

worin $k_1$ ungerade ist und das Produkt $k_1k_2$ modulo N genommen wird,

— dritte Multiplikationsmittel (88—90) zum Multiplizieren der jeweils N/2 Glieder eines jeden der N sechsten reduzierten Blöcke mit N/2 Koeffizienten, die jeweils gleich $W^{2l}$ sind, und somit zur Erstellung von N siebenten reduzierten Blöcken von N/2 Gliedern, und

— Mittel (92) zur Berechnung der N/2 Glieder der diskreten eindimensionalen Fourier-Transformierten eines jeden der genannten N siebenten reduzierten Blöcke, und somit zur Erstellung der diskreten bidimensionalen Fourier-Transformierten $\overline{X}_{k_1,k_2}$, die $k_1$ ungerade entspricht.

## Claims

1. Apparatus for computing the two-dimensional discrete Fourier transform, written $\overline{X}_{k_1,k_2}$, with $k_1$, $k_2=0$, 1,... N—1, of $N^2$ terms $x_{n_1}$, $x_{n_2}$ divided into N first blocks of N terms each, with $n_2$ and $n_1$ respectively denoting a block number and the position of a term within a block, and N being a power of 2, of the type wherein the two-dimensional problem is converted into a one-dimensional problem by means of multiplications and at least one polynomial transform, characterized in that it includes:

— means for receiving said N first blocks of N terms,

— first multiplication means (13—15) for respectively multiplying the N terms of each of said N first blocks by N first coefficients respectively equal to $W^{-n_1}$ where $W=e^{-j\pi/N}$, to thereby provide N second blocks of N terms, written $X_{n_2}(Z)$,

— transformation means (20) for deriving from said N second blocks N third blocks of N terms, written $\overline{X}_{(2k_1+1)k_2}(Z)$ in accordance with the polynomial transform defined as

$$\overline{X}_{(2k_1+1)k_2}(Z)= \sum_{n_2=0}^{N-1} X_{n_2}(Z)Z^{2n_2k_2} \text{ modulo } (Z^N+1)$$

where $(2k_1+1)k_2$ is defined modulo N,

— second multiplication means (24—26) for respectively multiplying the N terms of each of said N third blocks by N second coefficients respectively equal to $W^1$ where 1 varies between 0 and N—1 and is representative of the position of the term within the block, to thereby provide N fourth blocks of N terms, and means (28) for computing the N terms of the one-dimensional discrete Fourier transform of each of said N fourth blocks of N terms, to thereby provide the $N^2$ terms of the two-dimensional discrete Fourier transform of said N first blocks of N terms.

2. Apparatus for computing the two-dimensional discrete Fourier transform, written $\overline{X}_{k_1,k_2}$, with $K_1$, $k_2=0$, 1, ... N—1, of $N^2$ terms $x_{n_1}$, $x_{n_2}$ divided into N first blocks of N terms each, with $n_2$ and $n_1$ respectively denoting a block number and the position of a term within a block, and N being a power of 2, of the type wherein the two-dimensional problem is converted into a one-dimensional problem by means of multiplications and polynomial transforms by reducing each of said N first blocks to a first reduced block of N/2 terms, written $x^1_{n_2}(Z)$ by means of a reduction modulo $(Z^{N/2}+1)$ and to a second reduced block of N/2 terms, written $X^2_{n_2}(Z)$, by means of a reduction modulo $(Z^{N/2}-1)$, and wherein the terms of said Fourier transform $\overline{X}_{k_1,k_2}$ that correspond to $k_1$ odd and even are respectively derived from said N first and second reduced blocks, characterized in that it includes:

— first multiplication means (13'—15') for respectively multiplying the N/2 terms of each of said N second reduced blocks by N/2 first coefficients respectively equal to $W^{-2n_1}$, to thereby provide N third reduced blocks of N/2 terms, written

$$X^{20}_{n_2}(Z)= \sum_{n_2=0}^{N/2-1} (X_{n_1,n_2}+X_{n_1+N/2,n_2})W^{-Zn}Z$$

— first transformation means (20′) for determining from said N third reduced blocks N fourth blocks of N/2 terms, written $\overline{X}^2_{(2k_1+1)k_2}(Z)$ in accordance with the polynomial transform defined as

$$\overline{X}^2_{(2k_1+1)k_2}(Z)= \sum_{n_2=0}^{N-1} X^{20}_{n_2}(Z) Z^{n_2k_2} \text{ modulo } (Z^{N/2}+1)$$

where $k_1$ is even and the product $(2k_1+1)k_2$ is defined modulo N,

— second multiplication means (24′—26′) for respectively multiplying the N/2 terms of each of said N fourth reduced blocks by N/2 coefficients respectively equal to $W^{21}$ where 1 varies between 0 and N/2−1 and is representative of the position of the term within the block, to thereby provide N fifth reduced blocks of N/2 terms,

— means (28′) for computing the N/2 terms of the one-dimensional discrete Fourier transform of each of said N fifth reduced blocks, to thereby provide the terms of the two-dimensional discrete Fourier transform $\overline{X}_{k_1,k_2}$ that correspond to $k_1$ even,

— second transformation means (86) for deriving from said N first reduced blocks N sixth reduced blocks of N/2 terms, written $\overline{X}^1_{k_1k_2}(Z)$ in accordance with the polynomial transform defined as

$$\overline{X}^1_{k_1k_2}(Z)= \sum_{n_2=0}^{N-1} X^1_{n_2}(Z) Z^{n_2k_2} \text{ modulo } (Z^{N/2}+1)$$

where $k_1$ is odd and the product $k_1k_2$ is defined modulo N,

— third multiplication means (88—90) for respectively multiplying the N/2 terms of each of said N sixth reduced blocks by n/2 coefficients respectively equal to $W^{21}$, to thereby provide N seventh reduced blocks of N/2 terms, and

— means (92) for computing the N/2 terms of the one-dimensional discrete Fourier transform of each of said N seventh reduced blocks, to thereby provide the terms of the two-dimensional discrete Fourier transform $\overline{X}_{k_1,k_2}$ that correspond to $k_1$ odd.

FIG. 1

# FIG. 2

FIG.3

# FIG. 4